# EUROPEAN PATENT SPECIFICATION

(11) **EP 3 190 064 B1**
(45) Date of publication and mention of the grant of the patent: **18.09.2019**
(21) Application number: 16150634.0
(22) Date of filing: 08.01.2016
(51) Int. Cl.: B65D 85/10, B65D 5/42

(54) **PACKAGE FOR TOBACCO PRODUCTS, INCLUDING A RFID TAG**
VERPACKUNG FÜR TABAKPRODUKTE MIT EINEM RFID-ETIKETT
EMBALLAGE POUR TABAC COMPRENANT UNE ÉTIQUETTE RFID

(43) Date of publication of application: 12.07.2017
(73) Proprietor: Reemtsma Cigarettenfabriken GmbH, 22761 Hamburg (DE)
(72) Inventor: Novak, Slavomir, 22761 Hamburg (DE)
(74) Representative: Gulde & Partner

(56) References cited:
- EP-A1- 0 967 161
- WO-A1-2014/167309
- US-A1- 2005 022 470
- US-A1- 2007 146 142
- US-A1- 2010 177 993
- US-A1- 2012 067 374

## Description

The present invention relates generally to a package including smokeable or non-smokeable tobacco products, in particular raw tobacco, cigarettes or snus, or smokeable or non-smokeable tobacco related commodities, in particular cigarette paper, filters, tubes or filter tubes for cigarettes, or electronic or non-electronic smoking devices, in particular electronic cigarettes or aerosol-generating devices, wherein the package includes an RFID tag. The invention further relates to a method of producing such a package, a system comprising such a package, and an authentication method in connection with such a package. Packaging tobacco products or tobacco related commodities or smoking devices in particular into bags, folding boxes and cans is known. The known packages can e.g. have closures in the form of pivotal or detachable caps, inner parts which can be drawn out or swung out, or detachable can lids.

It is known in the art, e.g. in WO 2014/167309 A1 which discloses the features of the preamble of claim 1, or US 2007/0146142 A1, to provide a tobacco product packaging including an RFID tag, both for electronic article surveillance and for product authentication and/or identification. In particular, the RFID tag can serve as a security element proving the authenticity or genuineness of the product. Alternatively, an RFID tag can be used as a seal, indicating whether or not the respective tobacco product packaging has been tampered with, in particular, whether or not the package has already been opened. To that end, it has been suggested to arrange the RFID tag on the packaging so that an antenna and/or chip of the RFID tag is destroyed if the packaging is tampered with or opened. In other words, the RFID tag is then deactivated and can no longer be used as an authenticity feature.

US 2012/067374 A discloses a vacuum storage bag provided with a RFID tag which extends across a storage area access opening. A radio frequency identification tag reader will be able to pick up on the different frequencies emitted by an unopened and opened vacuum storage bag, thereby allowing a warehouse to quickly monitor and assess whether a shipment of vacuum storage bags has been tampered with.

It is an object of the present invention to suggest a package for tobacco products or tobacco related commodities or smoking devices providing improved protection against forgery as well as enhanced usability.

This object is solved by a package for tobacco products or tobacco related commodities or smoking devices, a method of producing same, a system, and an authentication method with the features defined in the independent claims. Preferred embodiments and enhancements are defined in the dependent claims.

In accordance with one aspect of the present invention there is provided a package for tobacco products or tobacco related commodities or smoking devices , which package has the features defined in claim 1 and includes an RFID tag. The RFID tag generally includes at least an integrated circuit (IC) and an antenna. The IC can store at least a unique tag information identifying the tag, e.g. a unique tag identification number (tag ID). The RFID tag comprises a sealing portion and is embedded in or attached to the package so that the sealing portion is destroyed if the package is opened. The RFID tag is configured to transmit, on request of a suitable reader device, a status information indicating whether the sealing portion is intact or has been destroyed. In particular, the RFID tag is configured to also transmit the status information in case the sealing portion has been destroyed. In other words, the RFID tag is merely modified, but not destroyed by breaking the sealing portion.

The inventive package including tobacco products or tobacco related commodities or smoking devices, which is referred to below for sake of convenience often simply as "package" or "packaging", has the advantage that the RFID tag serves both as an authenticity feature and as a seal, wherein the seal indicates whether or not the respective package has already been opened or tampered with. The authenticity of the product can be checked before and after opening the package. As set forth below in detail, due to the specific RFID tag the package in fact represents an interactive package that supports an authentication or consumer communication method, i.e. an interactive communication between the package and a manufacturer/vendor of the package, via a suitable communication device, such as a smartphone, of a consumer having bought the package for tobacco products or tobacco related commodities or smoking devices. The communication device can, on the one hand, act as a reader with respect to the RFID tag, and, on the other hand, can transmit information read from the RFID tag to an external server of the manufacturer/vendor and receive and process supplementary data received from the external server in reply to the transmitted information.

Preferably, the RFID tag is a passive RFID tag, i.e. a tag that does not include its one power supply but is powered by a electromagnetic field provided by the reader device. Alternatively, the RFID tag may also include a power supply.

Preferably, the RFID tag is configured to comply with the NFC (Near Field Communication) standards, in order to be readable by standard mobile devices supporting NFC. Such RFID tags are commonly also referred to as NFC tags.

According to an embodiment, the sealing portion includes a conductive element, preferably at least one conductive loop. The conductive element is conductively connected to an IC of the RFID tag, wherein the conductive element is configured to be broken if the sealing portion is destroyed. Generally, destroying the sealing portion, or, in particular, breaking the conductive element, influences the logic and/or operation of the RFID tag with respect to transmitting the status information. In other words, the RFID tag is configured to sense destroying the sealing portion or, specifically, a conductive element of the sealing portion, which conductive element is connected to an IC of the RFID tag. The value of the status information transmitted by the RFID tag on request of the reader device depends on the status (intact vs. destroyed) of the sealing portion.

According to a specific embodiment, the sealing portion can comprise a plurality of sub-portions, wherein each of these sub-portions includes a conductive element that is connected to the IC of the RFID tag. The RFID tag in this case interprets destroying at least one sub-portion of the sealing portion as destroying the sealing portion. This embodiment allows securing a package that can be opened at different locations and/or in different ways.

According to the invention, the RFID tag is configured to transmit, on request of a reader, an identification information, such as a unique tag ID, together with the status information. The identification information is transmitted irrespective of the status of the packaging.

According to an embodiment, the RFID tag is provided in the form of a label. Such a label can e.g. be attached to the package, preferably by means of an adhesive. In this case, the RFID tag is preferably attached to the packaging so that the sealing portion is located at an interface between a first and a second portion of the packaging, which first and second portion are displaced relative to each other if the package is opened. Alternatively, such a label can be embedded into the packaging, e.g. between different layers of the packaging, so that the sealing portion is destroyed if the package is opened.

According to a preferred embodiment, at least part of the electronics of the RFID tag is generated by printing. Thereby, the RFID tag can be produced at low cost. Further, a respectively produced RFID tag is flexible and very flat, and can thus be easily integrated in or attached to different kinds of package. Alternatively, the IC, the antenna and the conductive element representing the sealing portion can be directly arranged on, in particular directly printed to the package.

The package including tobacco products or tobacco related commodities or smoking devices can be formed in different dimensions and from different materials. According to one embodiment, the package is a carton or paper based box or packet, such as a cigarette hard pack or a cigarette soft pack. Optionally, a respective packet or box can include an inner liner, e.g. for flavor preservation. The inner liner can e.g. comprise an aluminum foil laminate. Alternatively or additionally, the packet or box can comprise an outer wrapper, e.g. for flavor and/or moisture preservation. The outer wrapper may e.g. comprise a plastic film or foil. According to a specific embodiment, a paper or carton based package is formed as container including a plurality of the above mentioned boxes or packets. Such a container can e.g. be formed by a paper based wrapper holding together the plurality of boxes or packs.

These types of packaging generally serve to store tobacco products such as cigarettes, small cigars, and cigars. Cigars can also be stored in wooden boxes, optionally including an inner liner and/or an outer wrapper.

Further, paper or carton based package can be used to store smokeable or non-smokeable tobacco related commodities, such as cigarette paper, filters, tubes or filter tubes for cigarettes. Cigarette papers can also be stored in paper or carton based booklets.

According to another embodiment, the package can be formed as a tin or can or canister or box, preferably formed from metal and/or plastic. Such a tin, can, or box can comprise an opening that can be closed by means of a lid or a cover. A lid can e.g. be connected to the tin or box by means of a hinge. Alternatively, a cover can be provided as screw cap, a cap to be simply put on or plugged in, or the like.

These types of packages generally serve to store tobacco products such a loose roll your own tobacco or smokeless tobacco, such as chewing tobacco, dipping tobacco, snus, dissolvable tobacco, snus, or snuff. Also electronic or non-electronic smoking devices, such as electronic cigarettes or aerosol-generating devices, are preferably stored in these types of packages. According to still another embodiment, the package can be formed as a pouch, preferably formed from plastic or foil lined paper. Again, an outer wrapper of foil or the like is optional. Also this type of package can serve to store tobacco products such a loose roll your own tobacco or smokeless tobacco.

According to a second aspect, a method of producing a package for tobacco products or tobacco related commodities or smoking devices is defined in claim 4. The method includes the step of providing a packaging that is configured to store tobacco products, tobacco related commodities, or smoking devices. The method further includes the steps of providing an RFID tag comprising a sealing portion and embedding the RFID tag in or attaching the RFID tag to the package so that the sealing portion is destroyed if the package is opened. As already described above in detail with respect to the package for tobacco products or tobacco related commodities or smoking devices according to the first aspect, the RFID tag is configured to transmit, on request of a reader, an identification information, such as a unique tag ID, together with a status information indicating whether the sealing portion is intact or has been destroyed.

The method comprises the step of filling the packaging with tobacco products and the step of closing the packaging.

The order of the above mentioned method steps can vary, depending on the type of packaging, the type of RFID tag, and the manner in which the RFID tag is embedded in or attached to the package. In some cases, the RFID tag is not attached to the packaging before the packaging is filled with tobacco products and is closed. In other cases, first the RFID tag is embedded into the packaging before the packing is filled and closed.

According to a third aspect, a system is defined in claim 5, the system including at least one package according to the invention, including tobacco products or tobacco related commodities or smoking devices as described above with respect to the first aspect, and at least one reader device, preferably in the form of a mobile device, such as a smartphone, a tablet computer, or the like. The reader device is configured to read in the commonly known manner an identification information and the status information from the RFID tag of the package and to output, based on the read status information, a status signal indicating whether the sealing portion of the RFID tag is intact or has been destroyed, i.e. whether or not the packaging has been opened.

Generally, the RFID tag complies with the NFC standards and the reader device supports NFC. In the reader device, an application ("app") can be installed that is configured to process the information read from the RFID tag, in particular to output the status signal in line with the status information. This application can further be configured to support the below described functions of the reader device.

The status signal can e.g. be displayed, i.e. output as a visual signal. Alternatively or additionally, the status signal can be output in the form of an audible signal or a signal that is tactilely perceptible.

The method therefore allows a consumer to easily and reliably check whether the package is intact or has already been opened or tampered with.

According to the invention, the system further comprises an external server that is connected to the reader device via a suitable communication network, such as the internet or a telecommunication network. The external server can be hosted by a manufacturer or vendor of the package for tobacco products or tobacco related commodities or smoking devices. In this context, the reader device is configured to transmit the identification information and the status information read from the RFID tag of the package to the external server. The external server, in turn, is configured to process the identification information and the status information received from the reader device, in particular to store the respective information in one or more databases and/or to analyze this type of information with respect to a plurality of package of the same or similar kind.

The external server is configured to provide supplementary data relating to the package to the reader device. In general, the supplementary data depend on the status information and/or the identification information received from the reader device. The reader device, in turn, is configured to process, i.e. store and/or output and/or execute, the supplementary data.

Further according to the invention, the supplementary data comprises an authenticity information regarding the authenticity or genuineness of the package. In this way, a consumer can be informed whether the package is genuine or a fake.

According to a variant, the supplementary data can comprise product information with respect to the package. This allows providing additional information about the tobacco product and/or similar products, which information can e.g. not be printed to the package due to space constraints.

According to a variant, the supplementary data can comprise advertising.

According to a variant, the supplementary data can comprise the possibility to directly reorder a package of the present kind or to comment on the tobacco product, e.g. on an internet site.

According to an embodiment, the type and/or amount of supplementary data provided by the external server can depend on whether or not the status information indicates a destroyed sealing portion, i.e. an opened package. In particular, according to an embodiment, the external server is configured to provide at least part of the supplementary data only in case the status information indicates that the sealing portion has been destroyed. In this case, a consumer cannot get the supplementary data before the tobacco product package has been opened. Typical supplementary data that is only provided after the package is opened is e.g. bonus material and/or extra features, such as bonus points, discounts, or computer games. But also the possibility to comment on the tobacco product and/or the possibility to directly reorder the tobacco product may only provided under these specific circumstances.

According to a fourth aspect, an authentication, or consumer communication method is defined in claim 7. This method uses the elements of the system according to the third aspect for the purposes already described above with respect to the system.

The method comprises the steps of providing a tobacco product package according to the first aspect, reading an identification information and the status information of the RFID tag by means of a reader device, and outputting, by the reader device, based on the status information, a status signal indicating whether the sealing portion of the RFID tag of the package is intact or has been destroyed.

The authentication method comprises the steps of transmitting, by the reader device, the identification information and the status information to an external server, via a suitable communication network, such as the internet or a telecommunication network, and processing the identification information and/or the status information by the external server.

The authentication method further comprises the steps of providing supplementary data relating to the package to the reader dependent on the status information and the identification information, and processing the supplementary data by the reader device.

According to a further embodiment, at least part of the supplementary data is only provided in case the status information indicates that the sealing portion has been destroyed.

The characteristics, features and advantages of this invention and the manner in which they are obtained as described above, will become more apparent and be more clearly understood in connection with the following description of exemplary embodiments, which are explained with reference to the accompanying drawings.

In the drawings, same element numbers indicate same elements in each of the views:
- Figure 1: is a schematic front view of a preferred embodiment of an RFID tag;
- Figures 2A and 2B: illustrate a perspective view of a first embodiment of a package for tobacco products or tobacco related commodities or smoking devices, in closed state and in opened state;
- Figure 3: is a perspective view of a package for tobacco products or tobacco related commodities or smoking devices according to a second embodiment;
- Figures 4A and 4B: illustrate a third embodiment of a package for tobacco products or tobacco related commodities or smoking devices, in perspective view and in bottom view.
- Figur 5: is a perspective view of a package for tobacco products or tobacco related commodities or smoking devices according to a fourth embodiment;
- Figure 6: schematically illustrates steps of a method of producing a package for tobacco products or tobacco related commodities or smoking devices;
- Figure 7: shows components of a system including the package of Fig. 2; and
- Figure 8: schematically illustrates steps of an authentication or consumer communication method with respect to a package according to any one of the embodiments shown in Fig. 2 to 5 using the system of Fig. 7.

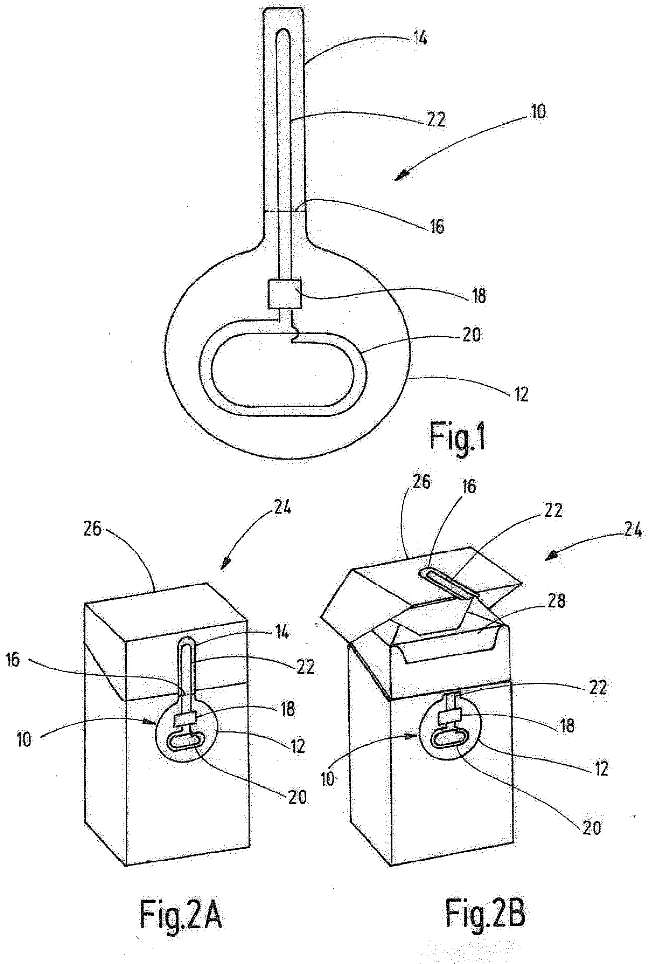

Fig. 1 shows an RFID tag 10 that is provided in the form of a label. Such a label can be attached to a package for tobacco products or tobacco related commodities or smoking devices, as shown in Fig. 2, e.g. by means of an suitable adhesive that prevents removal of the RFID tag 10 without destroying same. Alternatively, such a label can be embedded in a package, e.g. between different layers of a multi-layer packaging material.

The label 10 includes a base layer 12, 14 that is flat and can be formed from any suitable material, such as paper or plastics. Preferably, the base layer is printable.

The RFID tag 10 includes an IC 18 and an antenna 20 arranged on a portion 12 of the base layer 12, e.g. by printing. The antenna 20 is configured to ensure power supply of the IC, from an electromagnetic field generated by a reading device, and communication with the reader device.

The RFID tag 10 further includes a sealing portion 14 that protrudes from the main portion 12 of the base layer, and that contains a conductive element 22 in the form of a conductive loop 22. The conductive loop 22 is connected to the IC 18. The IC 18 is configured to sense whether the conductive loop is intact or is broken. At an interface between the sealing portion 14 and the main portion 12 of the label a predetermined breaking point 16 is provided, in order to ensure controlled rupture of the sealing portion 14, as described below with respect to Fig. 2A, 2B.

The IC 18 is configured to store at least an identification information, such as a unique tag ID, and, on request of the reader device, to transmit the identification information and a status information indicating whether the sealing portion is intact or has been destroyed. The value of the status information that is transmitted by the RFID tag 10 depends on whether the conductive loop 22 is intact or has been broken.

The specific geometric form of the base material main portion 12 and the sealing portion 14 can vary. The RFID tag can also include more than one IC and/or more than one antenna. Also the form of the antenna can vary.

According to an embodiment not shown, an RFID tag can directly be applied to a package, i.e. without providing a separate base layer. In this case, the IC, the antenna, and the conductive element representing the sealing portion can e.g. be printed to the respective packaging.

Figures 2A and 2B illustrate a perspective view of a first embodiment of a package for tobacco products or tobacco related commodities or smoking devices 24, in closed state (Fig. 2A) and in opened state (Fig. 2B). The package is formed as a generally known cigarette hard box, i.e. carton box with a hinged lid 26. The cigarettes inside the box are further enclosed by an inner liner 28 (cf. Fig. 2B) from an aluminum foil laminate. Optionally (not shown), an outer wrapper, e.g. a plastic foil, can be provided.

The RFID tag 10 of Fig. 1 is adhered to the front side of the carton box in such a way that the sealing portion 14, and with the sealing portion 14 the conductive loop 22, is broken if the box is opened by opening up the hinged lid 26, as shown in Fig. 2B.

In general, as described below with respect to further embodiments, an RFID tag 10 can be embedded in or arranged to a package 24 in such a way that the sealing portion 14 is arranged at an interface between a first and a second portion of the packaging, which first and second portion are displaced relative to each other if the packaging is opened - thereby destroying the sealing portion.

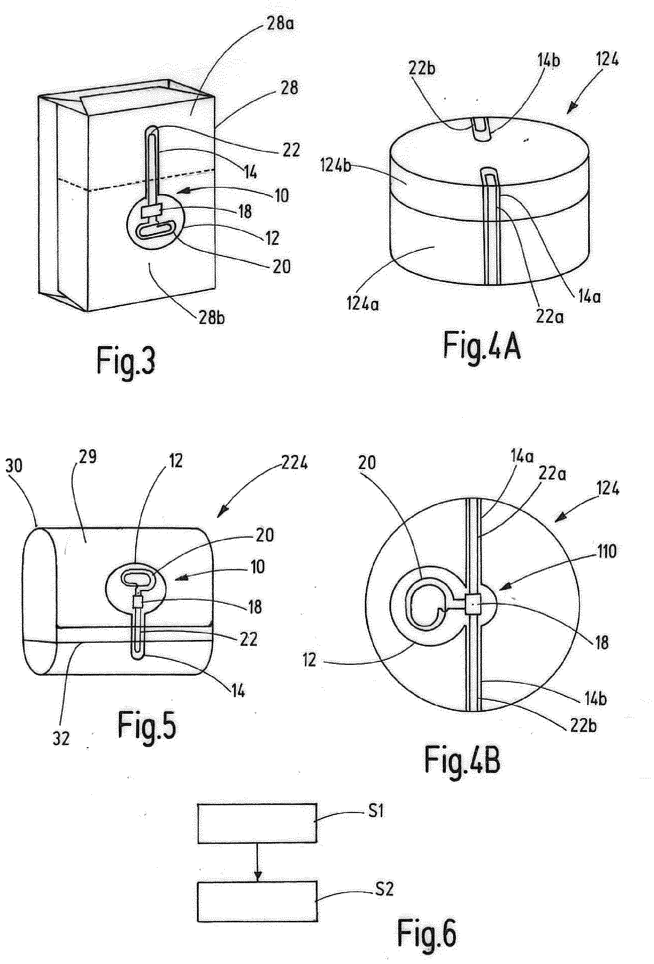

Figure 3 is a perspective view of a package for tobacco products or tobacco related commodities or smoking devices according to a second embodiment. According to this embodiment, the RFID tag 10 has been applied to the inner liner 28 of a cigarette hard box, at an interface between a pull tab 28a (first portion) and a remaining portion 28b (second portion) of the liner 28. For simplicity, the outer carton box is not shown. When tearing off the pull tab 28a, the sealing portion 14 and the conductive loop 22 are broken.

Figures 4A and 4B illustrate a third embodiment of a package for tobacco products or tobacco related commodities or smoking devices 124, in perspective view and in bottom view. The package 124 is provided in the form of a can including a base portion 124a, which is reclosable by means of a cover 124b. The cover 124b can simply be put or plugged on the base portion 124a or can be provided as a screwed cap. The can 124 can e.g. serve to store any kind of smokeless tobacco, such as chewing tobacco, dipping tobacco, dissolvable tobacco, snus, or snuff.

In contrast to the RFID tag shown in Fig. 1, the RFID tag 110 of the present embodiment includes a sealing portion 14 having two sub-portions 14a, 14b. Each sub-portion 14a, 14b in turn includes a conductive element 22a, 22b in the form of a conductive loop, which loops are connected to the IC 18, respectively. The main portion 12 of the label including the IC 18 and the antenna 20 is attached to the bottom of the can (cf. Fig. 4B). The sub-portions 14a, 14b of the sealing portion 14 are again attached to the package at an interface between a first portion, namely the base portion 124a, and a second portion, the cap 124b, that are displaced relative to each other if the packaging 124 is opened. If the can 124 is opened, e.g. by opening up the pluggable cap 124b according to an arbitrary direction, at least one of the sub-portions 14a, 14b is destroyed. According to another embodiment, the package can be formed as a tin or can or canister or box, preferably formed from metal and/or plastic. Such a tin, can, or box can comprise an opening that can be closed by means of a lid or a cover. A lid can e.g. be connected to the tin or box by means of a hinge. Alternatively, a cover can be provided as screw cap, a cap to be simply put on or plugged in, or the like.

Figure 5 is a perspective view of a package for tobacco products or tobacco related commodities or smoking devices 224 according to a fourth embodiment. The packaging 224 is formed as a pouch 29 enclosed by an outer wrapper 30 from plastic foil. Such a packaging can e.g. store loose tobacco, such as smokable loose roll your own tobacco, or smokeless tobacco. To the outer wrapper 30, the RFID tag 10 is attached in such a manner that, if the wrapper 30 is opened by tearing of the tear tape 32 of the outer wrapper 30, the sealing portion 14 and the conductive loop 22 are broken.

Figure 6 schematically illustrates steps of a method of producing a package for tobacco products or tobacco related commodities or smoking devices, e.g. a packaging according to any one of the above described embodiments.

In step S1, a package 24, 124, 224 that is configured to store tobacco products, smokeable or non-smokeable tobacco related commodities, or electronic or non-electronic smoking devices is provided, e.g. a carton box (cf. Fig. 2), a laminated liner (cf. Fig. 3), a can (cf. Fig. 4), or a pouch (cf. Fig. 5). In a further step S2, an RFID tag 10 (cf. Fig. 1, 4) comprising a sealing portion 14 is provided and embedded in or attached to the package so that the sealing portion 14 is destroyed if the package is opened. As described in detail with reference to Fig. 1 and Fig. 2A, 2B, the RFID tag 10, 110 is configured to transmit, on request of a reader, a status information indicating whether the sealing portion 14 is intact or has been destroyed.

The RFID tag 10 can be adhered to the packaging or can directly been printed to the packaging.

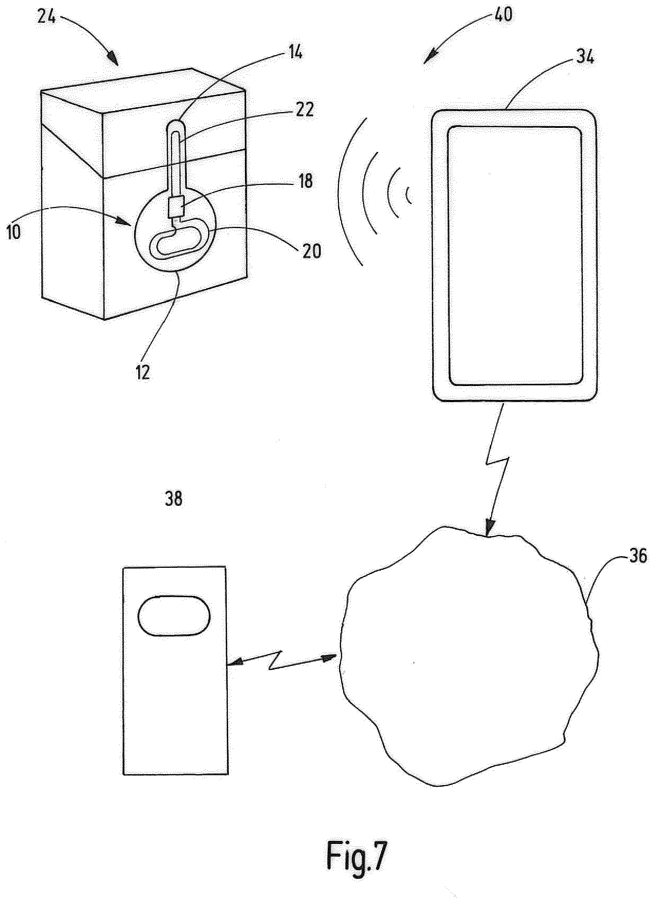

Figure 7 shows components of a system 40 including a package for tobacco products or tobacco related commodities or smoking devices 24. The system 40 further comprises at least one reader device 34, preferably in the form of a mobile device, such as a smartphone, a tablet computer, etc. The reader device 34 is configured to read an identification information and the status information from the RFID tag 10 of the package 24 in a generally known manner and to output, based on the status information, a status signal indicating whether the sealing portion 14 of the RFID tag 10 is intact or has been destroyed, i.e. whether or not the packaging 24 has been opened.

The system 40 can further comprise an external server 38 that is connected to the reader device 34 via a communication network 36, such as the internet. The reader device 34 is configured to transmit the identification information and/or the status information to the external server 38, which is configured to process the identification information and/or the status information.

The external server 38, which can be hosted by a manufacturer or vendor of the package 24, is configured to provide supplementary data relating to the tobacco product packaging 24 to the reader device 34, dependent on the status information and/or the identification information. The reader device is configured to process, e.g. to store, display, and/or execute, the supplementary data.

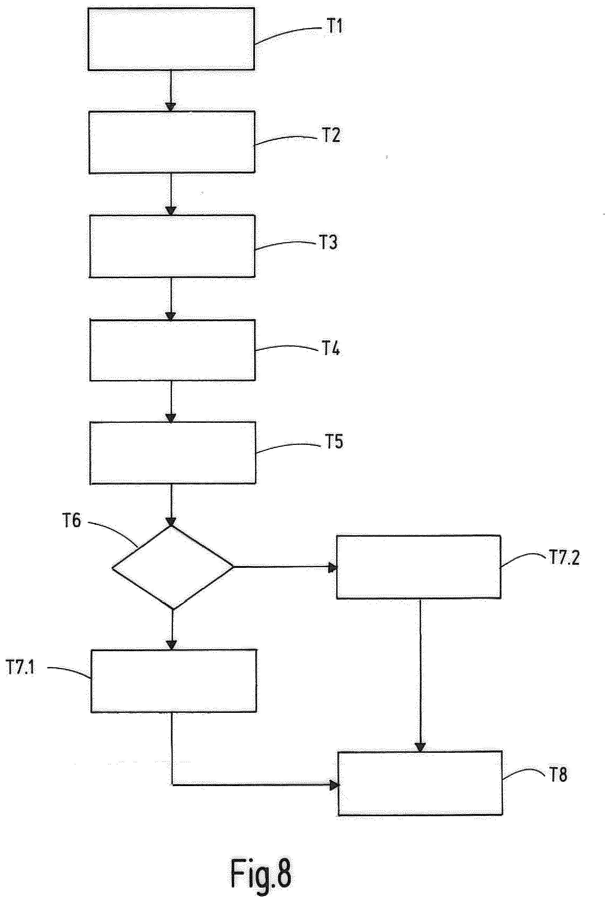

As described below in detail with reference to Fig. 8, the external server 38 can be configured to provide at least part of the supplementary data only in case the status information indicates that the sealing portion 14 has been destroyed.

The system 40 shown in Fig. 7 can serve to support the authentication method, which method is described below with reference to Fig. 8.

In a first step T1, a package for tobacco products or tobacco related commodities or smoking devices 24 is provided. In step T2, an identification information and the status information is read from the RFID tag 10 by means of the reader device 34. In step T3, the reader device 34, based on the status information read from the RFID tag 10, outputs a status signal indicating whether the sealing portion 14 of the RFID tag 10 of the package 24 is intact or has been destroyed. A consumer, in this way, can simply an reliably check whether or not the package is intact. According to a first variant, the method can stop at this stage. According to a second variant, further steps follow, as set forth below.

In step T4, the reader device transmits the identification information and the status information to the external server 38 via the communication network 36. The respective information is processed by the external server 38 in step T5. Processing this information can include storing/and or analyzing this information. Also at this stage, the method, according to a further variant, can stop. According to a preferred variant, supplementary data relating to the package 24 are provided to the reader device 34 by the external server 38, dependent on the status information and/or the identification information. In step T6, the external server analyzes the status information, namely whether the package 24 is intact or has already been opened.

In case the status information indicates an opened packaging 24, as illustrated with respect to step T7.2, a first set of supplementary data is provided to the reader device. This data can, on the one hand, and independent form the status information, include authenticity information and/or general product information with respect to the specific packaging 24, based on the identification information read by the reader device. On the other hand, the supplementary data can include bonus material for the consumer who has bought and opened the packaging, such as discount on further orders, computer games, and the like.

In case, however, the external device in step T6 finds out, by analyzing the received status information, that the product packaging 24 is still intact, in step T7.1 as supplementary data only provides the authenticity information and the general product information, but no bonus material. According to a variant, step T7.1 can also be omitted in this case, i.e. no supplementary data are provided.

In step T8, the reader device 34 processed the received supplementary data, in particular displays the authenticity information and the general product information. Bonus material, if received, can be processed in any suitable manner.

### LIST OF REFERENCE SIGNS

10, 110 RFID tag
12 base layer main portion
14 sealing portion
14a, 14b sub-portions of the sealing portion
16 predetermined breaking point
18 integrated circuit (IC)
20 antenna
22, 22a, 22b conductive element
24, 124, 224 package for tobacco products or tobacco related commodities or smoking devices
26 hinged lid
28 inner liner
28a pull tab of inner liner
28b remaining part of inner liner
29 pouch
30 outer wrapper
32 tear tape
34 reader device
36 communication network
38 external server
40 system
124a can base portion
124b cover
S1, S2 steps of a method of producing a package for tobacco products or tobacco
related commodities or smoking devices
T1 to T8 steps of an authentication or consumer communication method

## Claims

1. A package for tobacco products or tobacco related commodities or smoking devices (24; 124; 224), wherein the package (24; 124; 224) includes
tobacco products in the form of:
- smokable tobacco products, such as cigarettes, small cigars, cigars, or loose tobacco, or
- smokeless tobacco, such as chewing tobacco, dipping tobacco, dissolvable tobacco, snus, or snuff,
or wherein the package (24; 124; 224) includes
- smokeable or non-smokeable tobacco related commodities, such as cigarette paper, filters, tubes or filter tubes for cigarettes,
or wherein the package (24; 124; 224) includes
- electronic or non-electronic smoking devices, such as electronic cigarettes or aerosol-generating devices; and
the package (24; 124; 224) further including an RFID tag (10; 110), wherein the RFID tag (10; 110) comprises a sealing portion (14) and is embedded in or attached to the package (24; 124; 224) so that the sealing portion (14) is destroyed if the package (24; 124; 224) is opened, **characterised in that** the RFID tag (10; 110) is configured to transmit, on request of a reader device (34), an identification information, such as a unique tag ID, together with a status information indicating whether the sealing portion (14) is intact or has been destroyed.

2. The package (24) according to claim 1, wherein the sealing portion (14) includes a conductive element (22), preferably at least one conductive loop, that is connected to an IC (18) of the RFID tag (10), wherein the conductive element (22) is configured to be broken if the sealing portion (14) is destroyed.

3. The package (24; 124; 224) according to any one of claims 1 to 2, wherein the package is
- a carton or paper based box or packet (24) or booklet, optionally including an inner liner (28) and/or an outer wrapper (30), or a container including a plurality of such boxes or packets or booklets; or
- a tin or can (124) or canister, preferably formed from metal and/or plastic; or
- a pouch (29), preferably formed from plastic or foil lined paper.

4. A method of producing a package for tobacco products or tobacco related commodities or smoking devices (24; 124; 224), including the steps of
- providing (S1) a package that is configured to store tobacco products or tobacco related commodities or smoking devices;
- providing (S2) an RFID tag (10) comprising a sealing portion (14) and embedding the RFID tag (10) in or attaching the RFID tag (10) to the package (24; 124; 224) so that the sealing portion (14) is destroyed if the package (24; 124; 224) is opened, **characterised in that** the RFID tag (10) is configured to transmit, on request of a reader device (34), an identification information, such as a unique tag ID, together with a status information indicating whether the sealing portion (14) is intact or has been destroyed, the method further comprising the steps of
- filling the package (24; 124; 224) with tobacco products or tobacco related commodities or smoking devices and
- closing the package (24; 124; 224).

5. A system (40), including a package for tobacco products or tobacco related commodities or smoking devices (24; 124; 224) according to any one of claims 1 to 3, and a reader device (34), preferably in the form of a mobile device, wherein the reader device (34) is configured to read an identification information and the status information from the RFID tag (10) of the package (24; 124; 224) and to output, based on the status information, a status signal indicating whether the sealing portion (14) of the RFID tag (10) is intact or has been destroyed, the system further comprising an external server (38) that is connected to the reader device (34) via a communication network (36), wherein the reader device (34) is configured to transmit the identification information and the status information to the external server (38), which external server (38) is configured to process the identification information and the status information, wherein the external server (38) is configured to provide supplementary data relating to the package (24) dependent on the status information and/or the identification information, and wherein the reader device (34) is configured to display the supplementary data,
wherein the supplementary data includes authenticity information regarding the authenticity or genuineness of the package.

6. The system (40) according to claim 5, wherein the external server (38) is configured to provide at least part of the supplementary data only in case the status information indicates that the sealing portion (14) has been destroyed.

7. An authentication method, comprising the steps of:
- providing (T1) a package for tobacco products or tobacco related commodities or smoking devices (24; 124; 224) according to any one of claims 1 to 3;
- reading (T2) an identification information and the status information of the RFID tag (10) by means of a reader device (34) and
- outputting (T3) by the reader device (34), based on the status information, a status signal indicating whether the sealing portion (14) of the RFID tag (10) of the package (24; 124; 224) is intact or has been destroyed- transmitting (T4), by the reader device (34), the identification information and the status information to an external server (38) and
- processing (T5) the identification information and the status information by the external server (38),
- providing (T6; T7.1, T7.2) supplementary data relating to the package (24; 124; 224) to the reader device (34) dependent on the status information and the identification information; and
- displaying (T8) the supplementary data by the reader device (34), wherein the supplementary data includes authenticity information regarding the authenticity or genuineness of the package.

8. The method according to claim 7, wherein at least part of the supplementary data is only provided in case the status information indicates that the sealing portion (14) has been destroyed.

## Patentansprüche

1. Verpackung für Tabakprodukte oder tabakverwandte Erzeugnisse oder Rauchvorrichtungen (24; 124; 224), wobei die Verpackung (24; 124; 224) Tabakprodukte in folgenden Formen enthält:
- rauchbare Tabakprodukte wie Zigaretten, kleine Zigarren, Zigarren oder losen Tabak oder
- rauchlosen Tabak wie Kautabak, Tabak zum Einlegen in den Mund, löslichen Tabak, Snus oder Schnupftabak,
oder wobei die Verpackung (24; 124, 224) enthält:
- rauchbare oder nicht rauchbare tabakverwandte Erzeugnisse wie Zigarettenpapier, Filter, Hülsen oder Filterhülsen für Zigaretten,
oder wobei die Verpackung (24; 124; 224) enthält:
- elektronische oder nicht elektronische Rauchvorrichtungen wie elektronische Zigaretten oder aerosolerzeugende Vorrichtungen; und
die Verpackung (24; 124, 224) ferner ein RFID-Etikett (10; 110) umfasst, wobei das RFID-Etikett (10; 110) einen Versiegelungsabschnitt (14) umfasst und in die Verpackung (24; 124; 224) eingebettet oder daran angebracht ist, sodass der Versiegelungsabschnitt (14) zerstört wird, wenn die Verpackung (24; 124; 224) geöffnet wird, **dadurch gekennzeichnet, dass** das RFID-Etikett (10; 110) dazu ausgestaltet ist, auf Anforderung eines Lesegeräts (34) eine Identifikationsinformation, wie eine einmalig vergebene Etikett-ID, zusammen mit einer Statusinformation, die angibt, ob der Versiegelungsabschnitt (14) intakt ist oder zerstört wurde, zu übertragen.

2. Verpackung (24) nach Anspruch 1, wobei der Versiegelungsabschnitt (14) ein leitendes Element (22), vorzugsweise mindestens eine leitende Schleife, umfasst, das mit einem IC (18) des RFID-Etiketts (10) verbunden ist, wobei das leitende Element (22) dazu ausgestaltet ist, beschädigt zu werden, wenn der Versiegelungsabschnitt (14) zerstört wird.

3. Verpackung (24; 124; 224) nach einem der Ansprüche 1 bis 2, wobei die Verpackung Folgendes ist:
- eine Schachtel oder ein Paket (24) oder ein Heftchen auf der Basis von Karton oder Papier, die/das optional eine Innenauskleidung (28) und/oder eine Außenumhüllung (30) umfasst, oder ein Behälter, der eine Mehrzahl solcher Schachteln oder Pakete oder Heftchen enthält; oder
- eine Büchse oder Dose (124) oder ein Kanister, die/der vorzugsweise aus Metall und/oder Kunststoff ausgebildet ist; oder
- ein Beutel (29), der vorzugsweise aus Kunststoff oder mit Folie ausgekleidetem Papier ausgebildet ist.

4. Verfahren zur Herstellung einer Verpackung für Tabakprodukte oder tabakverwandte Erzeugnisse oder Rauchvorrichtungen (24; 124; 224), welches die folgenden Schritte umfasst:
- Bereitstellen (S1) einer Verpackung, die zur Aufbewahrung von Tabakprodukten oder tabakverwandten Erzeugnissen oder Rauchvorrichtungen ausgestaltet ist;
- Bereitstellen (S2) eines RFID-Etiketts (10), das einen Versiegelungsabschnitt (14) umfasst, und Einbetten des RFID-Etiketts (10) in oder Anbringen des RFID-Etiketts (10) an die/der Verpackung (24; 124; 224), sodass der Versiegelungsabschnitt (14) zerstört wird, wenn die Verpackung (24; 124; 224) geöffnet wird,
**dadurch gekennzeichnet, dass** das RFID-Etikett (10) dazu ausgestaltet ist, auf Anforderung eines Lesegeräts (34) eine Identifikationsinformation, wie eine einmalig vergebene Etikett-ID, zusammen mit einer Statusinformation, die angibt, ob der Versiegelungsabschnitt (14) intakt ist oder zerstört wurde, zu übertragen, wobei das Verfahren ferner folgende Schritte umfasst:
- Füllen der Verpackung (24; 124; 224) mit Tabakprodukten oder tabakverwandten Erzeugnissen oder Rauchvorrichtungen und
- Schließen der Verpackung (24; 124, 224).

5. System (40), umfassend eine Verpackung für Tabakprodukte oder tabakverwandte Erzeugnisse oder Rauchvorrichtungen (24; 124; 224) nach einem der Ansprüche 1 bis 3, und ein Lesegerät (34), vorzugsweise in Form eines mobilen Geräts, wobei das Lesegerät (34) dazu ausgestaltet ist, eine Identifikationsinformation und die Statusinformation von dem RFID-Etikett (10) der Verpackung (24; 124; 224) zu lesen und, basierend auf der Statusinformation, ein Statussignal auszugeben, das angibt, ob der Versiegelungsabschnitt (14) des RFID-Etiketts (10) intakt ist oder beschädigt wurde, wobei das System ferner einen externen Server (38) umfasst, der mit dem Lesegerät (34) über ein Kommunikationsnetzwerk (36) verbunden ist, wobei das Lesegerät (34) dazu ausgestaltet ist, die Identifikationsinformation und die Statusinformation an den externen Server (38) zu übertragen, wobei der externe Server (38) dazu ausgestaltet ist, die Identifikationsinformation und die Statusinformation zu verarbeiten, wobei der externe Server (38) dazu ausgestaltet ist, zusätzliche Daten bezüglich der Verpackung (24) abhängig von der Statusinformation und/oder der Identifikationsinformation bereitzustellen, und wobei das Lesegerät (34) dazu ausgestaltet ist, die zusätzlichen Daten anzuzeigen,
wobei die zusätzlichen Daten Authentizitätsinformationen bezüglich der Authentizität oder Echtheit der Verpackung enthalten.

6. System (40) nach Anspruch 5,
wobei der externe Server (38) dazu ausgestaltet ist,
mindestens einen Teil der zusätzlichen Daten nur für den Fall bereitzustellen, dass die Statusinformation angibt, dass der Versiegelungsabschnitt (14) zerstört wurde.

7. Authentifizierungsverfahren, umfassend die folgenden Schritte:
- Bereitstellen (T1) einer Verpackung für Tabakprodukte oder tabakverwandte Erzeugnisse oder Rauchvorrichtungen (24; 124; 224) nach einem der Ansprüche 1 bis 3;
- Lesen (T2) einer Identifikationsinformation und der Statusinformation des RFID-Etiketts (10) mittels eines Lesegeräts (34) und
- Ausgeben (T3) eines Statussignals, das angibt, ob der Versiegelungsabschnitt (14) des RFID-Etiketts (10) der Verpackung (24; 124; 224) intakt ist oder beschädigt wurde, durch das Lesegerät (34) basierend auf der Statusinformation,
- Übertragen (T4) der Identifikationsinformation und der Statusinformation an einen externen Server (38) durch das Lesegerät (34) und
- Verarbeiten (T5) der Identifikationsinformation und der Statusinformation durch den externen Server (38),
- Bereitstellen (T6, T7.1, T7.2) zusätzlicher Daten bezüglich der Verpackung (24; 124; 224) an das Lesegerät (34) abhängig von der Statusinformation und der Identifikationsinformation; und
- Anzeigen (T8) der zusätzlichen Daten durch das Lesegerät (34), wobei die zusätzlichen Daten Authentizitätsinformationen bezüglich der Authentizität oder Echtheit der Verpackung enthalten.

8. Verfahren nach Anspruch 7, wobei mindestens ein Teil der zusätzlichen Daten nur für den Fall bereitgestellt wird, dass die Statusinformation angibt, dass der Versiegelungsabschnitt (14) zerstört wurde.

## Revendications

1. Emballage pour produits de tabac ou articles de type tabac ou dispositifs à fumer (24 ; 124 ; 224), l'emballage (24 ; 124 ; 224) comprenant des produits de tabac sous la forme de :
- produits de tabac fumables, tels que cigarettes, cigarillos, cigares ou tabac en vrac, ou
- tabac non fumé, tel que tabac à mâcher, tabac à chiquer, tabac soluble, snus ou tabac à priser,
ou l'emballage (24 ; 124 ; 224) comprenant
- des articles de type tabac fumables ou non fumables, tels que papier à cigarette, filtres, tubes ou tubes à filtres pour cigarettes,
ou l'emballage (24 ; 124 ; 224) comprenant
- des dispositifs de cigarettes électroniques ou non électroniques, tels que des cigarettes électroniques ou des dispositifs produisant des aérosols ; et
l'emballage (24 ; 124 ; 224) comprenant en outre une étiquette RFID (10 ; 110), l'étiquette RFID (10 ; 110) comprenant une portion d'étanchéité (14) et étant intégrée à, ou attachée à, l'emballage (24 ; 124 ; 224) de telle sorte que la portion d'étanchéité (14) est détruite si l'emballage (24 ; 124 ; 224) est ouvert, **caractérisé en ce que** l'étiquette RFID (10 ; 110) est configurée pour transmettre, sur demande d'un dispositif lecteur (34), une information d'identification, telle un code d'étiquette unique, conjointement avec une information de statut indiquant si la portion d'étanchéité (14) est intacte ou a été détruite.

2. Emballage (24) selon la revendication 1, la portion d'étanchéité (14) comprenant un élément conducteur (22), de préférence au moins une boucle conductrice, lequel est connecté à un CI (18) de l'étiquette RFID (10), l'élément conducteur (22) étant configuré pour être brisé si la portion d'étanchéité (14) est détruite.

3. Emballage (24 ; 124 ; 224) selon l'une quelconque des revendications 1 à 2, l'emballage étant
- une boîte ou un sachet (24) ou un livret à base de carton ou de papier, comprenant facultativement un revêtement intérieur (28) et/ou une enveloppe extérieure (30), ou un récipient comprenant une pluralité de semblables boîtes ou sachets ou livrets ; ou
- une boîte de conserve ou une cannette (124) ou un réservoir, de préférence en métal et/ou en plastique ; ou
- une pochette (29), de préférence en plastique ou en papier doublé d'une feuille.

4. Procédé de production d'un emballage pour produits de tabac ou articles de type tabac ou dispositifs à fumer (24 ; 124 ; 224), comprenant les étapes de
- fournir (S1) un emballage qui est configuré pour stocker des produits de tabac ou des articles de type tabac ou des dispositifs à fumer ;
- fournir (S2) une étiquette RFID (10) comprenant une portion d'étanchéité (14) et intégrer l'étiquette RFID (10) dans, ou attacher l'étiquette RFID (10) sur, l'emballage (24 ; 124 ; 224) de telle sorte que la portion d'étanchéité (14) est détruite si l'emballage (24 ; 124 ; 224) est ouvert, **caractérisé en ce que** l'étiquette RFID (10) est configurée pour transmettre, sur demande d'un dispositif lecteur (34), une information d'identification, telle un code d'étiquette unique, conjointement avec une information de statut indiquant si la portion d'étanchéité (14) est intacte ou a été détruite, le procédé comprenant en outre les étapes de
- remplir l'emballage (24 ; 124 ; 224) avec des produits de tabac ou des articles de type tabac ou des dispositifs à fumer, et
- fermer l'emballage (24 ; 124 ; 224).

5. Système (40) comprenant un emballage pour produits de tabac ou articles de type tabac ou dispositifs à fumer (24 ; 124 ; 224) selon l'une quelconque des revendications 1 à 3, et un dispositif lecteur (34), de préférence sous la forme d'un dispositif mobile, le dispositif lecteur (34) étant configuré pour lire une information d'identification et l'information de statut sur l'étiquette RFID (10) de l'emballage (24 ; 124 ; 224) et pour sortir, basé sur l'information de statut, un signal de statut indiquant si la portion d'étanchéité (14) de l'étiquette RFID (10) est intacte ou a été détruite, le système comprenant en outre un serveur externe (38) qui est connecté au dispositif lecteur (34) via un réseau de communication (36), le dispositif lecteur (34) étant configuré pour transmettre l'information d'identification et l'information de statut au serveur externe (38), lequel serveur externe (38) est configuré pour traiter l'information d'identification et l'information de statut, le serveur externe (38) étant configuré pour fournir des données supplémentaires se rapportant à l'emballage (24) en fonction de l'information de statut et/ou de l'information d'identification, et le dispositif lecteur (34) étant configuré pour afficher les données supplémentaires,
les données supplémentaires comprenant des informations d'authenticité concernant l'authenticité ou le caractère véritable de l'emballage.

6. Système (40) selon la revendication 5,
le serveur externe (38) étant configuré pour
fournir au moins une partie des données supplémentaires uniquement si l'information de statut indique que la portion d'étanchéité (14) a été détruite.

7. Procédé d'authentification, comprenant les étapes de :
- fournir (T1) un emballage pour produits de tabac ou articles de type tabac ou dispositifs à fumer (24 ; 124 ; 224) selon l'une quelconque des revendications 1 à 3 ;
- lire (T2) une information d'identification et l'information de statut sur l'étiquette RFID (10) au moyen d'un dispositif lecteur (34), et
- sortir (T3), par le dispositif lecteur (34), un signal de statut indiquant si la portion d'étanchéité (14) de l'étiquette RFID (10) de l'emballage (24 ;124 ; 224) est intacte ou a été détruite, basé sur l'information de statut,
transmettre (T4), par le dispositif lecteur (34), l'information d'identification et l'information de statut à un serveur externe (38), et
- traiter (T5) l'information d'identification et l'information de statut par le serveur externe (38),
- fournir (T6 ; T7.1, T7.2) des données supplémentaires relatives à l'emballage (24 ; 124 ; 224) au dispositif lecteur (34) en fonction de l'information de statut et de l'information d'identification ; et
- afficher (T8) les données supplémentaires par le dispositif lecteur (34), les données supplémentaires comprenant des informations d'authenticité concernant l'authenticité ou le caractère véritable de l'emballage.

8. Procédé selon la revendication 7, au moins une partie des données supplémentaires étant fournie uniquement si l'information de statut indique que la portion d'étanchéité (14) a été détruite.
